# EUROPEAN PATENT SPECIFICATION

(11) **EP 3 262 952 B1**
(45) Date of publication and mention of the grant of the patent: **29.10.2025**
(21) Application number: 16177367.6
(22) Date of filing: 30.06.2016
(51) Int. Cl.: A23J 1/10, A23J 3/34, C08H 1/06, A23L 33/18, A23K 10/26

(54) **METHOD FOR PREPARING DIGESTIBLE FEATHER OR HAIR MEAL**
VERFAHREN ZUR HERSTELLUNG EINER VERDAULICHEN FEDER- ODER HAARMAHLZEIT
PROCÉDÉ DE PRÉPARATION D'UN REPAS DIGESTIBLE À BASE DE PLUMES OU DE POILS

(43) Date of publication of application: 03.01.2018
(73) Proprietor: Stam Agro nv, 9200 Dendermonde (BE)
(72) Inventor: VANOVERSCHELDE, Jef, 9200 Dendermonde (BE); VANOVERSCHELDE, Vaast, 9200 Dendermonde (BE)
(74) Representative: Brantsandpatents bv

(56) References cited:
- EP-A1- 1 776 874
- EP-A1- 2 832 236
- WO-A2-2015/014860
- RU-C1- 2 413 422
- US-A- 4 151 306
- US-A- 4 172 073
- US-A- 5 772 968
- US-A1- 2013 209 611
- US-A1- 2016 157 511

## Description

### Field of the invention

The present invention relates to a process for the preparation of a hydrolysable mixture from poultry feathers and/or hair, as well as the hydrolysable mixture obtainable by said process. The present invention further relates to a method for the manufacturing of a digestible feather or hair composition comprising a step of hydrolyzing said hydrolysable mixture (H), and the digestible feather or hair composition thereof.

### Background of the invention

Livestock is usually fed with fish and meat meals, as they are suitable sources of animal protein. Poultry industries generate large amounts of residues like feathers, which have to be disposed of. Feathers and hair have a high content of keratin (85-100 %), a protein which in its natural state is unfortunately indigestible to animals, because of the high degree of polymerization. Keratin has cysteine disulfide bonds, which make the protein insoluble and which need to be broken in order to allow for digestion (Moran et al., 1966).

Peptide bonds can be broken down by hydrolysis, which hydrolysis may be performed with water and physical means (pressure and heat), chemical means (1% hydrochloric acid solution, dimethylsulphoxide, sodium sulfide, sodium thioglycolate, sodium hydroxide), or with biological means (enzymes like bacterial or fungal keratinase, alkaline protease, or with specific microorganisms).

Whereas some hydrolytic processes might increase protein digestibility they could, at the same time, reduce the nutritional value of the resulting product since changes in the amino acid pattern can occur. For instance, part of the amino acids may become linked to other substances or form new cross-linkages within the protein molecule (Hurrell et al., 1976; Whitaker, 1980) by bonds resistant to hydrolysis by the digestive enzymes, though liberated by acid hydrolysis. It is also notably known that after processing feather meal there might be a drastic reduction in cysteine concentration (Block and Bolling, 1951; Gregory et al., 1956; Davis et al., 1961; McCasland and Richardson, 1966; Moran et al., 1966). It is generally concluded that the cysteine content in the feather meal decreases as processing time and pressure increase. It is also known that substantial differences in amino acid reduction have been found in samples from chemical treatments and to a smaller extent in the enzymatic ones, by comparison with the treatments without additives (Papadopoulos 1984).

This being said, it means that the hydrolytic process can affect the digestibility of the proteins in the final product meal but influence at the same time the nutritional value of the product meal by altering the amino acid pattern of the hydrolyzed feathers or hair in the product meal.

The prior art includes patents which disclose a variety of processes for converting indigestible proteinaceous materials into digestible products.

GB1030515 (Ishmael Maurice Docken) discloses a continuous method for converting wet poultry feathers into a proteinaceous feed meal using an apparatus which allows said conversion in the slaughterhouse itself. The feathers are ground, and subsequently hydrolyzed in a heated treatment chamber system, where the feathers are subjected to a treatment by steam. The meal material is finally dried in a dryer. The reported pressure used in the disclosed process is about 7.22 bar (90 pounds above atmospheric pressure). The compact apparatus, being built for operation at the slaughter site, uses a simple design characterized by a minimum of devices. This leads to an increase in energy use.

US 4,269,865 (Ralston Purina) discloses a process for conversion of one of the primary by-products from a poultry operation into food products by first converting moistened feathers in a predigest tank under elevated pressure and temperature while avoiding agitation, to a pulpy mass. Said pulpy mass is subsequently hydrolyzed, while being mechanically agitated under conditions of elevated pressure and temperature, into a proteinaceous product that is nutritionally available to animals. In this method, it is the combination of optimal steam pressures, in particular in the range of 40-80 psig pressure and optimal retention times of 15 minutes or less, preferably 3-15 minutes in the hydrolysis unit, that provides improved nutritive properties of the proteinaceous product, suitable as a potential food or feed ingredient.

US 4,151,306 (Anderson Int, Ibec Industries, Inc.) discloses a process for hydrolyzing proteinaceous derivatives of the skin, such as notably feathers and hair, including the steps of dewatering the raw material to reduce the moisture content thereof to a level sufficient to support the subsequent hydrolyzing step. In general, the process is comprising the steps of mechanically dewatering raw keratinous material to reduce the water content to 30-40 % while maintaining the water in its liquid phase, applying heat and pressure to the dewatered material to hydrolyze the material, and drying the material. The mechanically dewatered material is hydrolyzed by passing through an extruder wherein the keratinous material is mechanically subjected to high sheer causing a temperature and pressure build-up in the material, while maintaining the water in its liquid phase, to hydrolyze the keratin. Typical processing conditions in the extruder are 30 seconds residence time, 800 psi pressure, 300 °F temperature and 35% moisture content in the treated material. The hydrolyzed skin derivatives exit the extruder and are conveyed to a steam heated dryer where the moisture is reduced to approximately 8%. Raw feathers hydrolyzed according to the process had over 65% digestible protein, whereas hydrolyzed hog hair had more than 55% digestible protein.

EP 2832236 A1 (Tessenderlo Chemie NV) discloses a method for producing digestible keratinaceous material comprising the steps of hydrolysing keratinaceous material in the presence of water, generally in an amount between 30 and 80 wt%, in a hydrolyser at elevated temperature and at a pressure between about 2 bar and about 10 bar. EP 2832236 A1 further discloses the drying of the resultant hydrolysed keratinaceous material comprising at least partly insoluble material in a dryer at a temperature/time/pressure combination which limits the drop in pepsin and/or ileal digestibility by less than 10%, and/or such that the pepsin and/or ileal digestibility remains higher than 85%. Preferably, the drying of the resultant hydrolysed partly soluble keratinaceous material is performed in a dryer at a temperature such that the keratinaceous material remains at a temperature below 90 °C.

RU2413422 (Ooo Rosana) discloses a method to produce fodder additive from feather and raw materials, which includes heating and grinding of initial raw materials, its sterilisation, hydrolysis and drying. Raw materials with initial moisture of 30-75% are continuously fed into a mixer-grinder where they are compacted 8-10 times and heated at the pressure of 0.5-5.0 MPa and temperature of 60-120 °C with subsequent hydrothermal treatment at 180-200 °C for 5-90 sec. with simultaneous fine grinding and abrasion. The process of fine grinding and water hydrolysis of keratin are carried out in thin layer up to 30 mm, then the second phase of high-temperature hydrolysis is carried out at the pressure of 5.0-15.0 MPa for 90-270 sec at the temperature of 180-250 °C, and product of raw materials processing is discharged into a zone at atmospheric pressure.

Despite the efforts that have been made towards the development of methods for hydrolyzing feathers thereby creating feather meal suitable as a food or feed ingredient having improved nutritional value, as mentioned above, several challenges remain. First of all, it still remains a challenge to ensure that the digestible feather or hair meal has high and guaranteed nutritional values and at the same time a constant and optimized amino acid pattern, thus a guaranteed protein digestibility, regardless the quality and origin of the starting material. Secondly, it remains a challenge to develop a process which is versatile enough so that the process parameters can be fine-tuned in function of the desired product properties and specifications. Thirdly, it remains a challenge to translate said process into an industrially viable method, capable of producing large amounts of said digestible feather or hair meal.

Therefore, there is thus a need for an improved environmental friendly and efficient process for the manufacturing of a stable hydrolysable starting material that can provide after hydrolysis a hydrolyzed feather or hair product having a stable, targeted amino acid composition, i.e. guaranteed protein digestibility and a guaranteed stable high nutritional value.

### Summary of the invention

The inventors have now surprisingly found that it is possible to provide an improved process fulfilling the above mentioned needs.

It is thus an object of the present invention to provide a process for manufacturing a digestible feather and hair composition, said method comprising: (i) manufacturing a hydrolysable mixture [hydrolysable mixture (H), herein after], hydrolysable mixture (H) being manufactured according to process comprising:
a. providing a composition [composition (C), herein after] which comprises feathers and/or hair and water, which water is at least partially absorbed by said feathers and/or hair, and which composition has a dry matter content of Y wt.% which is equal to or smaller than 60 wt.% with reference to the total weight of the composition (C)
b. pressing out at least part of the water of composition (C), thereby forming a composition [composition (B) herein after] which has a dry matter content of Y₁, which is greater than Y wt.% but comprised between 30 and 60 wt.% with reference to the total weight of the composition (B)
c. adding an aqueous liquid [aqueous liquid (A), herein after] to the composition (B), thereby forming the hydrolysable mixture (H) wherein said hydrolysable mixture (H) has a dry matter content of Y₂, which is lower than Y₁ wt.% but comprised between 20 to 50 wt.%. with reference to the total weight of the hydrolysable mixture (H), said aqueous liquid (A) being an enriched protein-containing liquid which is obtained as a product stream after hydrolyzing the hydrolysable mixture (H);
(ii) hydrolyzing said hydrolysable mixture (H).

It is thus an object of the present invention to provide a method for manufacturing a digestible feather or hair composition comprising the hydrolysis of the hydrolysable mixture (H).

It is also a further object of the present invention to provide digestible feather or hair compositions.

### Detailed description of the invention

### Manufacturing of the hydrolysable mixture (H)

In a step a., the invention provides for a composition (C) which comprises feathers and/or hair and water, which water is at least partially absorbed by said feathers and/or hair, and which composition has a dry matter content of Y wt.% which is equal to or smaller than 60 wt.% with reference to the total weight of composition (C).

According to certain embodiments of the present invention, the composition (C) may be any by-product or waste material of biological origin including notably organic material, particularly from poultry, bovine, ovine, pigs, pets, birds, fur-bearing animals and the like, usually obtained from a slaughtering plant or rendering operation [starting material, herein after], preferably obtained from a poultry or hog slaughtering plant or poultry or hog rendering operation. It is present practice that these by-product or waste material of biological origin are poultry feathers or hair transported by truck from a slaughterhouse to a conversion plant.

It will be clear to the skilled in the art that the starting material may arrive at the conversion plant in various shapes and conditions. The starting material can still be dirty or may have been pre-washed. Likewise, it may already have been ground or chopped to a certain degree.

Usually, the dry matter content of the starting material on arrival at the conversion plant is unknown due to the fact that the pre-treatments at the slaughtering plant are often an unknown factor.

In this view, upon arrival at the conversion plant, said starting material is preferably subjected to a pre-treatment step. Said pre-treatment step may include notably, but is not limited to, adding and/or removing water, cleaning, washing, sorting, defatting, cutting, milling, grinding, or any combination thereof.

Such pre-treatment step may facilitate the handling of the starting material such as to render the same more easily removable and transportable. It also removes unwanted organic and inorganic material, thereby increasing the quality of the final product. It may also further improve the efficiency of further processing steps.

Preferably, the starting material is provided to an infeed device system, which may comprise at least a large compartment such as a bunker for storing the starting material, and/or a washing and/or transport system. In said infeed device system, the starting material may be mixed with water so as to obtain the composition (C) of step a. of the process of the present invention.

According to a preferred embodiment of the process of the present invention, the starting material is mixed with water in the infeed device system so as to obtain the composition (C) having a dry matter content of Y wt.% which is at most 50 wt.%, preferably having a dry matter content of Y wt.% which is at most 40 wt.%, more preferably having a dry matter content of Y wt.% which is at most 30 wt.%, even more preferably having a dry matter content of Y wt.% which is at most 25 wt.% with reference to the total weight of composition (C).

Such an infeed device system may advantageously provide at the same time for the transport of the starting material, as well as washing and/or separating the starting material from unwanted organic material, such as blood, fat, or portions of the animal's body, and/or from unwanted inorganic material, such as plastic, metal parts, sand and rubber. Said infeed device system may also advantageously allow to segregate thick packs of entangled starting material into smaller, transportable portions.

The infeed device system, as mentioned above, typically uses commercially available devices, such as screw conveyors, pumps, and/or revolving or rotary screens. Impurities or undesired matter can be eliminated by sieves positioned below the screw conveyor channel. Alternatively, the revolving screen has perforations on the walls that allow the elimination of impurities while tumbling.

When the starting material comprises an amount of water which exceeds the preferred amount of water, then the washing and/or transport system advantageously comprises a dewatering screw with the aim of removing at least part of the water of the starting material so as to obtain the composition (C) of step a. of the process of the present invention.

In a step b., the invention provides for pressing out at least part of the water of composition (C), thereby forming a composition [composition (B) herein after] which has a dry matter content of Y₁, which is greater than Y wt.% but comprised between 30 and 60 wt.% with reference to the total weight of composition (B).

Preferably, the dry matter content Y₁ of composition (B) is at least 32 wt.%, more preferably at least 34 wt.%, even more preferably at least 36 wt.%, more preferably at least 38 wt.%, and most preferably at least 40 wt.% with reference to the total weight of composition B. It is further understood that the dry matter content Y₁ of composition (B) is preferably at most 58 wt.%, more preferably at most 56 wt.%, even more preferably at most 54 wt.%, more preferably at most 52 wt.%, and most preferably at most 50 wt.% with reference to the total weight of composition (B).

According to one embodiment of the process according to the present invention, the act of pressing out the at least part of the water of composition (C) in step b. can be performed by using a force of gravity, in particular the pressing force of the feathers and/or hair comprised in the composition (C). More in particular, the feathers and/or hair comprised in the composition (C) can be packed in the form of at least one layer, wherein the feathers and/or hair in the top portion of the at least one layer exert pressure on the feathers and/or hair situated in the lower portions of the at least one layer, thereby pressing out at least part of the water which water is at least partially absorbed by said feathers and/or hair. Alternatively, the at least part of the water of composition (C) in step b. can be removed using a decanter.

In a preferred embodiment of the process according to the present invention, the act of pressing out the at least part of the water of composition (C) in step b. can be performed using a dewatering press, of which several models are available in the market.

Due to the act of pressing out at least part of the water, the feathers and/or hair are mechanically dewatered and macerated as they are forcibly conveyed through the press. A screw conveyor or screw press that continuously compresses the material may be used. Such a device comprises an elongated, cylindrical barrel housing containing an axially disposed rotatable shaft for driving a feed worm to advance wet material through the barrel, and a plurality of knife bars protruding between the worm flights for cooperating with the latter to effect a compression process. The press barrel is typically made of stainless steel cage bars, which capture, drain, and press feathers or hair.

Water is collected and squeezed out of the feathers and/or hair, and may be drained through a sewage pipe located at the bottom, or the water can flow through slots in the compression barrel of the screw press. Preferably, the collected water is lead back to the infeed device system.

According to an alternative embodiment, dewatering may be performed by thermal drying such as conveying through jacketed, steam-heated vessels.

According to certain embodiments of the process according to the present invention, the composition (B) is preferably ground prior to step c.

Grinding of the composition (B) may be done with a grinder, a mixer that has a shaft with one or more rotating discs, or any other device available on the market. Radial vanes on the disc's periphery may be used to blow the feathers and hair comprised in composition (B) out at high velocity. The rotating discs have preferably a tooth pattern. These devices chop up the wet feathers or hair comprised in the composition (B). The advantage of grinding the feathers and/or hair prior to hydrolysis is that the composition (B) will be a pulpier mixture which allows easier hydrolysis and at a lower energy cost.

As said in step c. of the process of the present invention, an aqueous liquid (A) is added to the composition (B), as described above, thereby forming the hydrolysable mixture (H) wherein said hydrolysable mixture (H) has a dry matter content of Y₂, which is lower than Y₁ wt.% but comprised between 20 to 50 wt.%.

According to a preferred embodiment of the process according to the present invention, said hydrolysable mixture (H) has a dry matter content Y₂, which is lower than Y₁ wt.% but of at most 48 wt.%, preferably at most 46 wt.%, more preferably at most 44 wt.%, even more preferably at most 42 wt% and most preferably at most 40 wt.%, with reference to the total weight of the hydrolysable mixture (H). It is further understood that said hydrolysable mixture (H) has a dry matter content Y₂, which is lower than Y₁ wt. % but of at least 22 wt.%, preferably at least 24 wt.%, more preferably at least 26 wt.%, even more preferably at least 28 wt.% and most preferably at least 30 wt.%, with reference to the total weight of the hydrolysable mixture (H).

According to certain embodiments of the process according to the present invention, the aqueous liquid (A) is a liquid comprising water.

Preferably, the aqueous liquid (A) has a temperature which is at least 50 °C, more preferably at least 60 °C, even more preferably at least 70 °C, more preferably at least 80 °C, and most preferably at least 85 °C.

According to a preferred embodiment of the process according to the present invention, said aqueous liquid (A) is a liquid comprising water, further enriched with at least amino acids, polypeptides and/or proteins, in particular said proteins, polypeptides and/or amino acids being derived from feathers and/or hair.

According to the process according to the present invention, said aqueous liquid (A) is an enriched protein-containing liquid which is obtained as a product stream after hydrolyzing the hydrolysable mixture (H), as discussed in detail below.

The inventors have now surprisingly found that adding an aqueous liquid (A), comprising proteins and/or amino acids, to the composition (B) results in increasing the protein and/or amino acids content of said hydrolysable mixture (H). As such, the protein and/or amino acids content of the final feather meal product can also be influenced.

The hydrolysable mixture (H) prepared by the process according to the present disclosure is not an aspect of the present invention.

### Manufacturing of a digestible feather or hair composition

The hydrolysable mixture (H) of the present invention is then further used to provide a digestible feather or hair composition.

It is a further aspect of the present invention to provide a method for the manufacturing of a digestible feather or hair composition comprising a step of hydrolyzing the hydrolysable mixture (H) of the present invention.

Techniques for hydrolyzing proteinaceous derivatives of the skin, such as notably feathers and hair are well known in the art.

Advantageously, the hydrolysis of the hydrolysable mixture (H) of the present invention is performed in at least one reactor thereby forming a hydrolyzed mixture (M).

For the purpose of the invention, the term "at least one reactor" refers to one or more reactors.

The skilled in the art will apply the optimal parameters such as temperature, pressure, and hydrolysis time in order to perform the hydrolysis of the hydrolysable mixture (H) of the present invention in the at least one reactor.

The hydrolysis time of the hydrolysable mixture (H) of the present invention in the at least one reactor is advantageously at least 3 minutes, preferably at least 4 minutes, and most preferably at least 5 minutes. It is further understood that the hydrolysis time in the at least one reactor is advantageously at most 25 minutes, preferably at most 20, preferably at most 19 minutes, more preferably at most 18 minutes, even more preferably at most 17 minutes, more preferably at most 16 minutes, and most preferably at most 15 minutes.

Advantageously, the at least one reactor is operated at an elevated pressure of at least 3 bar, preferably at least 4 bar, more preferably at least 5 bar, and most preferably at least 6 bar. It is further understood that the at least one reactor is advantageously operated at an elevated pressure of at most 12 bar, preferably at most 11 bar, more preferably at most 10 bar and most preferably at most 9 bar.

Advantageously, the at least one reactor is operated at a temperature of at least 135 °C, preferably at least 145 °C, more preferably at least 155 °C, even more preferably at least 165 °C, and most preferably at least 175 °C. It is further understood that the at least one reactor is advantageously operated at a temperature of at most 245 °C, preferably at most 235 °C, more preferably at most 225 °C, even more preferably at most 215 °C, more preferably at most 205 °C, and most preferably at most 195 °C.

Good results were found when the at least one reactor is operated at a temperature range from 160 °C to 205 °C.

According to one embodiment of the present invention, the hydrolysable mixture (H) is hydrolyzed in one reactor.

According to a preferred embodiment of the present invention, the hydrolysable mixture (H) is hydrolyzed in two or more reactors which are placed in series, preferably in 2 reactors which are placed in series. The two or more reactors may be similar or different, more preferably the first and the second reactor are similar reactors. It is further understood that in each of the reactors optimal pressure, temperature, and hydrolysis time conditions are used, in particular an increasing order of pressures is used.

The first of said two or more hydrolysis reactors is preferably operated at an elevated pressure of at least 1 bar, more preferably of at least 3 bar. It is further understood that the first of said two or more hydrolysis reactors is advantageously operated at an elevated pressure of at most 6 bar, more preferably at most 5 bar. Good results can be found when the first of said two or more hydrolysis reactors is operated at an elevated pressure from 1 bar to 5 bar.

The second of said two or more hydrolysis reactors is operated at an elevated pressure of at least 6 bar, preferably at least 7 bar, and more preferably at least 8 bar. It is further understood that the second of said two or more hydrolysis reactors is advantageously operated at an elevated pressure of at most 12 bar, preferably at most 11 bar, and more preferably at most 10 bar. Good results can be found when the second of said two or more hydrolysis reactors is operated at an elevated pressure from 8 bar to 12 bar.

When a third reactor is present, said third of said two or more hydrolysis reactors is preferably operated at an elevated pressure of at least 10 bar. It is further understood that said third hydrolysis reactor is advantageously operated at an elevated pressure of at most 13 bar, preferably at most 12 bar. Good results can be found when the third hydrolysis reactor is operated at an elevated pressure which is slightly higher than 10 bar.

The advantage of using two or more reactors is that it allows to influence and optimize the nutritional value as well as the amino acid pattern of the final feather or hair meal product.

The method for the manufacturing of a digestible feather or hair composition according to the present invention, further comprises the step of separating the hydrolyzed mixture (M), as described in detail above, in i) at least one solid-phase portion [solid-phase portion (S) herein after] and ii) at least one liquid portion [liquid portion (L) herein after[ by using suitable equipment.

As typical suitable equipment mention may be notably made of a press and a decanter and/or a centrifuge.

For the purpose of the invention, the term "liquid portion" refers to the supernatant that remains on top of the solid-phase portion (S) in the suitable equipment employed for separation.

According to one embodiment of the method for the manufacturing of a digestible feather or hair composition according to the present invention, at least part of the at least one liquid portion (L) is submitted to evaporation thereby forming an enriched protein-containing liquid [enriched liquid (E) herein after], having a dry matter content Y₃. Preferably, the dry matter content Y₃ of said enriched liquid (E) is at least 40 wt.%, preferably at least 43 wt.%, more preferably at least 45 wt.%, and most preferably at least 48 wt. %. It is further understood that the dry matter content Y₃ of said enriched liquid (E) is at most 60 wt.%, preferably at most 57 wt.%, and more preferably at most 54 wt%. It is understood that the enriched liquid (E) can be liquid at the temperature of evaporation but may be a paste at ambient temperature.

According to another embodiment of the method for the manufacturing of a digestible feather or hair composition, at least part of the liquid portion (L) is used to form said aqueous liquid (A) which is added to the composition (B), thereby forming the hydrolysable mixture (H) as described above.

According to an alternative embodiment of the method for the manufacturing of a digestible feather or hair composition, at least part of the enriched liquid (E) is used to form said aqueous liquid (A) which is added to the composition (B), thereby forming the hydrolysable mixture (H) as described above.

The aqueous liquid (A), derived from the at least part of the liquid portion (L) or at least part of the enriched liquid (E), is added in such amounts so as to obtain the hydrolysable mixture (H) having a dry matter content of Y₂, which is lower than Y₁ wt.% but comprised between 20 to 50 wt.%, as described above.

The inventors have now found that by redirecting a product stream of the hydrolysis process in the form of the aqueous liquid (A) to the composition (B), a cumbersome process can be avoided of extracting proteins out of an aqueous liquid characterized by a rather low protein concentration.

In the method for the manufacturing of a digestible feather or hair composition according to the present invention, at least part of said solid-phase portion (S) is dried thereby forming a digestible feather or hair composition.

Preferably, drying at least part of said solid-phase portion (S) is suitably carried out on a band or belt dryer, a fluid bed dryer, or conveyor dryer, preferably a belt dryer.

Preferably, the drying of the at least part of said solid-phase portion (S) is carried out with air wherein said solid-phase portion (S) has a temperature of at most 80 °C, preferably at most 75 °C and most preferably at most 70 °C.

The inventors have now found that drying at least part of said solid-phase portion (S) at said mild temperatures in the dryer, as described here above, advantageously improves the quality of the digestible feather or hair composition.

Moreover, traditional drying equipment of the prior art, like drum dryers, employing higher temperatures, result in undesirable Maillard reactions by which the product is burnt, thereby losing the integrity of the proteins as well as lowering the quality of the end product.

In general, the drying of the at least part of said solid-phase portion (S) is carried out under atmospheric pressure, preferably at an under-pressure, with reference to the atmospheric pressure, of -20 to -40 mbar, more preferably, at an under-pressure of around -30 mbar.

According to another embodiment of the method for the manufacturing of a digestible feather or hair composition, said solid-phase portion (S) is mixed with at least part of the enriched liquid (E) before drying.

According to an alternative embodiment of the method for the manufacturing of a digestible feather or hair composition, the hydrolyzed mixture (M) is mixed with at least part of the enriched liquid (E).

The present invention further relates to the digestible feather or hair composition, as described above.

The present invention further relates to a digestible feather or hair composition comprising at least 82 wt.%, even more preferably at least 83 wt. %, more preferably at least 84 wt.%, and most preferably at least 85 wt.% of proteins with reference to the total weight of the digestible feather or hair composition. At least 84%, and most preferably at least 85% of said proteins are digestible proteins.

As used herein, the term " digestible protein" refers to the proteins that are able to be digested by enzymes in the digestive track of an animal as measured by the pepsin digestibility as described in the experimental section. It is a subset of the total protein content.

Said digestible feather or hair composition comprises at least 6 wt.%, preferably at least 7 wt.%, and more preferably at least 8 wt.% of fat with reference to the total weight of the digestible feather or hair composition. It is further understood that said digestible feather or hair composition comprises at most 12 wt.%, preferably at most 11 wt.%, and more preferably at most 10 wt.% of fat with reference to the total weight of the digestible feather or hair composition.

Said digestible feather or hair composition comprises at least 0.5 wt.%, and preferably at least 1 wt.% of ash with reference to the total weight of the digestible feather or hair composition. It is further understood that said digestible feather or hair composition comprises at most 4 wt.%, preferably at most 3 wt.%, and more preferably at most 2 wt.% of ash with reference to the total weight of the digestible feather or hair composition.

Said digestible feather or hair composition comprises at least 4 wt.%, preferably at least 5 wt.%, and more preferably at least 6 wt.% of moisture with reference to the total weight of the digestible feather or hair composition. It is further understood that said digestible feather or hair composition comprises at most 10 wt.%, preferably at most 9 wt.%, more preferably at most 8 wt.% of moisture with reference to the total weight of the digestible feather or hair composition.

The present invention further relates to an enriched liquid (E) obtainable by the process according to any one of embodiments presented herein.

The present invention further relates to an enriched liquid (E) comprising at least 45 wt.% of proteins with reference to the total weight of the enriched liquid (E). At least 95% of said proteins are digestible proteins.

This enriched liquid (E) and/or the digestible feather or hair composition may be commercialized as a separate product. Said enriched liquid (E) and/or the digestible feather or hair composition may be mixed with optionally a binder and other ingredients and granulated to prepare an edible composition, an agrochemical composition or a cosmetic composition.

The invention further relates to an edible composition, an agrochemical composition or a cosmetic composition comprising the digestible feather or hair composition as defined herein, and/or the enriched liquid (E) as defined herein.

The edible composition may be selected from a group consisting of a foodstuff, food component, food additive or feed additive.

Said edible composition is in particular suitable for animals, preferably farm animals including fishes, pigs, poultry, cows, sheep, and goats, pets, birds, and fur-bearing animals.

Among typical examples of said cosmetic compositions mention may be notably made of hair, nail, or skin product compositions such as notably, but not limited to, shampoo, creams, lotions, gels, nail polish, nail lacquer, and the like.

The present invention further relates to the use of the digestible feather or hair composition as defined herein, or the enriched liquid (E) as defined herein, as a fertilizer; or as a foodstuff or feed additive for animals, preferably farm animals including fishes, pigs, poultry, cows, sheep, and goats, pets, birds, and fur-bearing animals.

The present invention further relates to the use of the digestible feather or hair composition as defined herein, or the enriched liquid (E) as defined herein, as a cosmetic ingredient, preferably as an ingredient in a hair, nail, or skin product composition.

The present invention further relates to the digestible feather or hair composition as defined herein, or the enriched liquid (E) as defined herein, for use as a hair or nail growth promoter.

The present invention further relates to the digestible feather or hair composition as defined herein, or the enriched liquid (E) as defined herein, for use as a hair or nail reinforcer.

The present invention further relates to the digestible feather or hair composition as defined herein, or the enriched liquid (E) as defined herein, for use as a skin protector.

The use of the specific procedural steps and conditions of the present invention to treat the feathers and hair improves the overall nutritive and functional properties of the proteinaceous end product as evidenced by feedings and digestibility tests carried out with the proteinaceous end product. Furthermore, the transformed hydrolyzed feather or hair product also represents a product of improved nutritive properties over prior art means of conversion since the use of constant mixtures of starting material, and the use of mild drying conditions, not only improves the nutritive properties but permits treatment of the feathers and hair on a continuous basis thereby improving overall process efficiency and economy.

The following examples are illustrative of the present invention.

### Examples

*At all stages of the process, the dry matter content is known and controlled, allowing to reproduce the quality and composition of the digestible feather or hair composition. Likewise, it is inherent to the invention that the process conditions can be optimized and programmed for the manufacturing of a digestible feather or hair composition with desired composition and characteristics, while minimizing waste as well the use of energy and resources.*

### Example 1: Preparing a digestible feather composition

A composition (C) containing washed chicken feathers and water, with a dry matter content of 12 wt% was treated according to the process of the present invention. The water was pressed out until a dry matter content of 47 wt% was reached thereby forming a composition (B). An aqueous liquid (A) having a temperature of 87 °C and comprising a part of the liquid portion (L) of a previous batch, was added to obtain a dry matter content of 33 wt%, thereby forming a hydrolysable mixture (H). The hydrolysable mixture (H) was treated in a hydrolyser which was operated at 7 bar and a temperature of 165 °C for 18 minutes thereby forming a hydrolyzed mixture (M). The hydrolyzed mixture (M) was separated into a solid-phase portion (S) and a liquid portion (L) by using a press. The solid-phase portion (S) was dried by using a belt dryer operated at an air temperature of 95 °C (whereby the temperature of the solid-phase portion (S) did not rise above 80 °C) and a pressure of 1 bar thereby forming a digestible feather composition. A part of the liquid portion (L) was submitted to evaporation thereby forming an enriched liquid (E) while another part of the liquid portion (L) was used as the aqueous liquid (A) in the next batch of the production process. The protein content, the pepsin digestibility, the fat content, the ash content and the moisture content of both the digestible feather composition as well as the enriched liquid (E) was analyzed and the results are summarized in Table 1. The protein content was determined according to ISO 5983 (1997-11), the fat content was analyzed according to ISO 6492 (1999-08), the ash content was analyzed according to ISO 5984, the moisture content was analyzed according to ISO 6496 and the pepsin digestibility was determined according to ISO 6655 (1997-08, 0.02% pepsin).

**Table 1**

| **Analyzed parameter** | **Digestible feather composition** | **Enriched liquid (E)** |
|---|---|---|
| Protein content | 82 - 85 % | > 45% |
| Pepsin digestibility | 84 - 87 % | > 95% |
| Fat content | 8 - 10% | < 4% |
| Ash content | 1 - 2% | < 1% |
| Dry matter content | 92 - 94 % | < 50% |

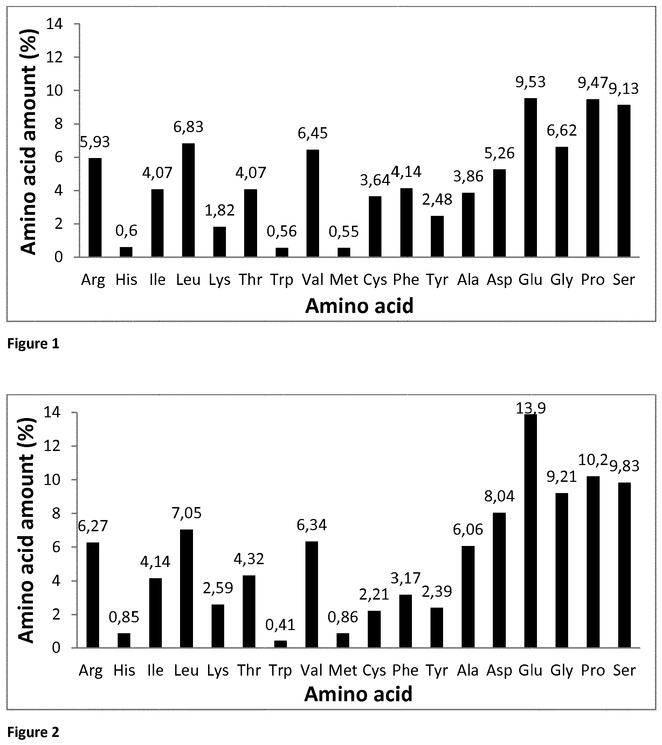

Table I shows that the digestible feather composition as well as the enriched liquid (E) obtained by the process according to the present invention have a very high pepsin digestibility.
The amino acid pattern of the digestible feather composition was analyzed according to ISO 13903 and is shown in Figure 1; the amino acid pattern of the enriched liquid (E) is shown in Figure 2.

### Example 2: Reproducibility preparing digestible feather composition

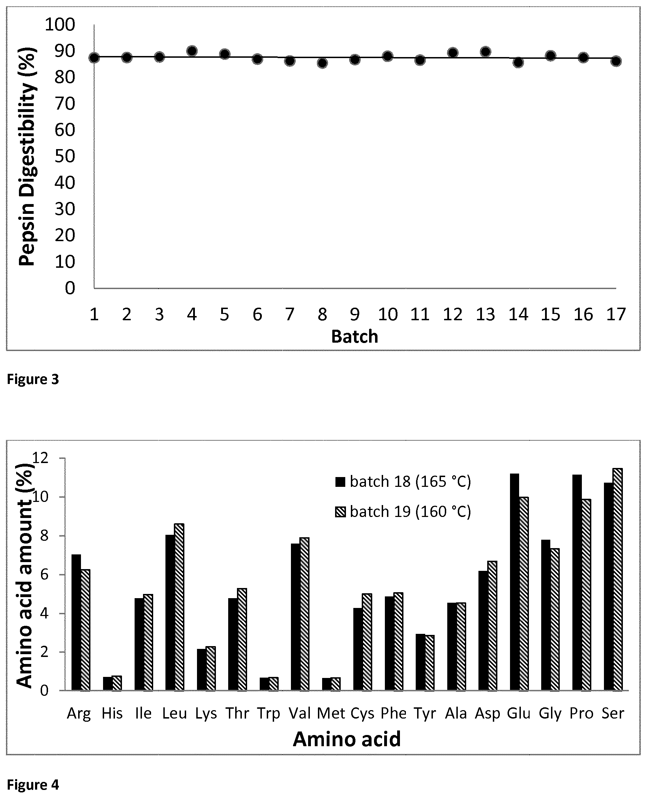

To assess the reproducibility of the process according to the present invention, during a time period of 3 months, multiple digestible feather compositions were prepared according to the same procedure as described in Example 1. Of each of the produced digestible feather compositions (batch 1 to 17), the pepsin digestibility was determined according to ISO 6655 (1997-08, 0.02% pepsin). The results are summarized in Figure 3. Figure 3 shows that the pepsin digestibility value for the digestible feather compositions, even between different batches, is very stable and thus independent of small differences inherent to the used raw material (i.e. chicken feathers).

### Example 3: Influence of temperature on the amino acid pattern of the digestible feather composition

Two batches of digestible feather compositions were prepared according to the same procedure as described in Example 1, except that the hydrolyzer was operated at a temperature of 165 °C for batch 18 and at 160 °C for batch 19. The amino acid patterns of batch 1 and batch 2 of digestible feather compositions were analyzed according to ISO 13903 and are shown in Figure 4. The results show that the process according to the present invention is a versatile process which allows to tune the amino acid pattern in function of the specific requirements for a digestible feather composition for a particular use.

## Claims

1. A method for the manufacturing of a digestible feather and hair composition, wherein said method comprises:
(i) manufacturing a hydrolysable mixture [hydrolysable mixture (H), herein after], said hydrolysable mixture (H) being manufactured according to a process comprising:
a. providing a composition [composition (C), herein after] which comprises feathers and/or hair and water, which water is at least partially absorbed by said feathers and/or hair, and which composition has a dry matter content of Y wt.% which is equal to or smaller than 60 wt.% with reference to the total weight of the composition (C)
b. pressing out at least part of the water of composition (C), thereby forming a composition [composition (B) herein after] which has a dry matter content of Y₁, which is greater than Y wt.% but comprised between 30 and 60 wt.% with reference to the total weight of the composition (B)
c. adding an aqueous liquid [aqueous liquid (A), herein after] to the composition (B), thereby forming the hydrolysable mixture (H) wherein said hydrolysable mixture (H) has a dry matter content of Y₂, which is lower than Y₁ wt.% but comprised between 20 to 50 wt.%. with reference to the total weight of the hydrolysable mixture (H), wherein said aqueous liquid (A) is an enriched protein-containing liquid which is obtained as a product stream after hydrolyzing the hydrolysable mixture (H), and
(ii) hydrolyzing said hydrolysable mixture (H).

2. The method according to claim 1, wherein the dry matter content Y wt.% of the composition (C) is at most 50 wt.%, preferably at most 40 wt.%, more preferably at most 30 wt.%, even more preferably at most 25 wt.%.

3. The method according to claim 1 or 2, wherein the dry matter content Y₁ of the composition (B) is at least 32 wt.%, more preferably at least 34 wt.%, even more preferably at least 36 wt.%, more preferably at least 38 wt.%, most preferably at least 40 wt.%, and wherein the dry matter content Y₁ of the composition (B) is preferably at most 58 wt.%, more preferably at most 56 wt.%, even more preferably at most 54 wt.%, more preferably at most 52 wt.%, and most preferably at most 50 wt.% with reference to the total weight of composition (B).

4. The method according to any one of claims 1 to 3, wherein the dry matter content Y₂ of the hydrolysable mixture (H) is at most 48 wt.%, preferably at most 46 wt.%, more preferably at most 44 wt.%, even more preferably at most 42 wt% most preferably at most 40 wt.%, and wherein the dry matter content Y₂ of the hydrolysable mixture (H) is at least 22 wt.%, preferably at least 24 wt.%, more preferably at least 26 wt.%, even more preferably at least 28 wt.% and most preferably at least 30 wt.%, with reference to the total weight of the hydrolysable mixture (H).

5. The method according to any one of claims 1 to 4, wherein the aqueous liquid (A) is a liquid comprising water, further enriched with at least amino acids, polypeptides and/or proteins, and wherein said aqueous liquid (A) has a temperature which is at least 50 °C, more preferably at least 60 °C, even more preferably at least 70 °C, more preferably at least 80 °C, and most preferably at least 85 °C.

6. The method according to any one of claims 1 to 5, wherein the hydrolysis of the hydrolysable mixture (H) is performed in at least one reactor thereby forming a hydrolyzed mixture (M).

7. The method according to any one of claims 1 to 6, wherein the step of hydrolyzing is **characterized by** a hydrolysis time of at least 3 minutes, preferably at least 4 minutes, most preferably at least 5 minutes, and wherein the step of hydrolyzing is **characterized by** a hydrolysis time of at most 25 minutes, preferably at most 20, preferably at most 19 minutes, more preferably at most 18 minutes, even more preferably at most 17 minutes, more preferably at most 16 minutes, and most preferably at most 15 minutes.

8. The method according to any one of claims 1 to 7, wherein the at least one reactor is operated at a pressure of at least 3 bar, preferably at least 4 bar, more preferably at least 5 bar, most preferably at least 6 bar, and wherein the at least one reactor is operated at a pressure of at most 12 bar, preferably at most 11 bar, more preferably at most 10 bar and most preferably at most 9 bar.

9. The method according to any one of claims 6 to 8, wherein the at least one reactor is operated at a temperature of at least 135 °C, preferably at least 145 °C, more preferably at least 155 °C, even more preferably at least 165 °C, most preferably at least 175 °C, and wherein the at least one reactor is operated at a temperature of at most 245 °C, preferably at most 235 °C, more preferably at most 225 °C, even more preferably at most 215 °C, more preferably at most 205 °C, and most preferably at most 195 °C.

10. The method according to any one of claims 1 to 9, further comprising the step of separating the hydrolyzed mixture (M), in i) at least one solid-phase portion [solid-phase portion (S) herein after] and ii) at least one liquid portion [liquid portion (L) herein after].

11. The method according to claim 10 , further comprising the step of submitting at least part of the at least one liquid portion (L) to evaporation thereby forming an enriched protein-containing liquid [enriched liquid (E) herein after], having a dry matter content Y₃, wherein Y₃ is at least 40 wt.%, preferably at least 43 wt.%, more preferably at least 45 wt.%, most preferably at least 48 wt.%, and wherein Y₃ is at most 60 wt.%, preferably at most 57 wt.%, and more preferably at most 54 wt%.

12. The method according to claim 10 or 11, wherein the at least part of the liquid portion (L) or the at least part of the enriched liquid (E) is used to form the aqueous liquid (A) as defined in claim 1.

13. The method according to claim 10, further comprising the step of drying at least part of the solid-phase portion (S) thereby forming a digestible feather or hair composition.

14. The method according to claim 13, wherein the drying of the at least part of said solid-phase portion (S) is carried out with air wherein said solid-phase portion (S) has a temperature of at most 80 °C, preferably at most 75 °C and most preferably at most 70 °C.

15. A digestible feather or hair composition manufactured according to the method according to any one of claims 1 to 14, comprising at least 82 wt.% of proteins with reference to the total weight of the digestible feather or hair composition, wherein at least 84% of the proteins are digestible proteins.

16. An enriched liquid (E) manufactured according to the method according to claim 11, comprising at least 45 wt.% of proteins with reference to the total weight of the digestible feather or hair composition, wherein at least 95% of the proteins are digestible proteins.

17. An edible composition, an agrochemical composition or a cosmetic composition comprising the digestible feather or hair composition according to any one of claims 15, or the enriched liquid (E) according to claim 16.

## Patentansprüche

1. Ein Verfahren zur Herstellung einer verdaulichen Feder- und Haarzusammensetzung, wobei das Verfahren umfasst:
(i) Herstellung einer hydrolysierbaren Mischung [im Folgenden hydrolysierbare Mischung (H)], wobei die hydrolysierbare Mischung (H) nach einem Verfahren hergestellt wird, umfassend:
a. Bereitstellen einer Zusammensetzung [im Folgenden Zusammensetzung (C)], die Federn und/oder Haare und Wasser umfasst, wobei das Wasser zumindest teilweise von den Federn und/oder Haaren absorbiert wird, und wobei die Zusammensetzung einen Trockenmassegehalt von Y Gew.-% aufweist, der gleich oder kleiner als 60 Gew.-% ist, bezogen auf das Gesamtgewicht der Zusammensetzung (C)
b. Auspressen von mindestens einem Teil des Wassers aus der Zusammensetzung (C), wodurch eine Zusammensetzung [im Folgenden Zusammensetzung (B)] gebildet wird, die einen Trockenmassegehalt von Y₁ aufweist, der größer als Y Gew.-% ist, aber zwischen 30 und 60 Gew.-%, bezogen auf das Gesamtgewicht der Zusammensetzung (B), liegt
c. Zugabe einer wässrigen Flüssigkeit [im Folgenden wässrige Flüssigkeit (A)] zu der Zusammensetzung (B), wodurch die hydrolysierbare Mischung (H) gebildet wird, wobei die hydrolysierbare Mischung (H) einen Trockenmassegehalt von Y₂ aufweist, der niedriger ist als Y₁ Gew.-%, aber zwischen 20 zu 50 Gew.-%, bezogen auf das Gesamtgewicht der hydrolysierbaren Mischung (H), beträgt,
wobei die wässrige Flüssigkeit (A) eine angereicherte proteinhaltige Flüssigkeit ist, die nach der Hydrolyse der hydrolysierbaren Mischung (H) als Produktstrom erhalten wird, und
(ii) Hydrolyse der hydrolysierbaren Mischung (H).

2. Das Verfahren nach Anspruch 1, wobei der Trockenmassegehalt Y Gew.-% der Zusammensetzung (C) höchstens 50 Gew.-%, vorzugsweise höchstens 40 Gew.-%, stärker bevorzugt höchstens 30 Gew.-%, noch stärker bevorzugt höchstens 25 Gew.-% beträgt.

3. Das Verfahren nach Anspruch 1 oder 2, wobei der Trockenmassegehalt Y₁ der Zusammensetzung (B) mindestens 32 Gew.-%, bevorzugter mindestens 34 Gew.-%, noch bevorzugter mindestens 36 Gew.-%, noch bevorzugter mindestens 38 Gew.-%, am bevorzugtesten mindestens 40 Gew.-% beträgt, und wobei der Trockenmassegehalt Y₁ der Zusammensetzung (B) vorzugsweise höchstens 58 Gew.-%, bevorzugter höchstens 56 Gew.-%, noch bevorzugter höchstens 54 Gew.-%, noch bevorzugter höchstens 52 Gew.-% und am bevorzugtesten höchstens 50 Gew.-% beträgt, bezogen auf das Gesamtgewicht der Zusammensetzung (B).

4. Das Verfahren nach einem der Ansprüche 1 bis 3, wobei der Trockenmassegehalt Y₂ der hydrolysierbaren Mischung (H) höchstens 48 Gew.-%, vorzugsweise höchstens 46 Gew.-%, stärker bevorzugt höchstens 44 Gew.-%, noch stärker bevorzugt höchstens 42 Gew.-% und am meisten bevorzugt höchstens 40 Gew.-% beträgt, und wobei der Trockenmassegehalt Y₂ der hydrolysierbaren Mischung (H) mindestens 22 Gew.-%, vorzugsweise mindestens 24 Gew.-%, stärker bevorzugt mindestens 26 Gew.-%, noch stärker bevorzugt mindestens 28 Gew.-% und am meisten bevorzugt mindestens 30 Gew.-% beträgt, bezogen auf das Gesamtgewicht der hydrolysierbaren Mischung (H).

5. Das Verfahren nach einem der Ansprüche 1 bis 4, wobei die wässrige Flüssigkeit (A) eine Flüssigkeit ist, die Wasser umfasst, und zusätzlich mit mindestens Aminosäuren, Polypeptiden und/oder Proteinen angereichert ist, und wobei die wässrige Flüssigkeit (A) eine Temperatur aufweist, die mindestens 50 °C, bevorzugter mindestens 60 °C, noch bevorzugter mindestens 70 °C, noch bevorzugter mindestens 80 °C und am bevorzugtesten mindestens 85 °C beträgt.

6. Das Verfahren nach einem der Ansprüche 1 bis 5, wobei die Hydrolyse der hydrolysierbaren Mischung (H) in mindestens einem Reaktor durchgeführt wird, wodurch ein hydrolysiertes Gemisch (M) gebildet wird.

7. Das Verfahren nach einem der Ansprüche 1 bis 6, wobei der Schritt des Hydrolysierens durch eine Hydrolysezeit von mindestens 3 Minuten, vorzugsweise mindestens 4 Minuten, am meisten bevorzugt mindestens 5 Minuten gekennzeichnet ist, und wobei der Schritt des Hydrolysierens durch eine Hydrolysezeit von höchstens 25 Minuten, vorzugsweise höchstens 20, vorzugsweise höchstens 19 Minuten, stärker bevorzugt höchstens 18 Minuten, noch stärker bevorzugt höchstens 17 Minuten, stärker bevorzugt höchstens 16 Minuten und am meisten bevorzugt höchstens 15 Minuten gekennzeichnet ist.

8. Das Verfahren nach einem der Ansprüche 1 bis 7, wobei der mindestens eine Reaktor bei einem Druck von mindestens 3 bar, vorzugsweise mindestens 4 bar, bevorzugter mindestens 5 bar, am bevorzugtesten mindestens 6 bar betrieben wird, und wobei der mindestens eine Reaktor bei einem Druck von höchstens 12 bar, vorzugsweise höchstens 11 bar, bevorzugter höchstens 10 bar und am bevorzugtesten höchstens 9 bar betrieben wird.

9. Das Verfahren nach einem der Ansprüche 6 bis 8, wobei der mindestens eine Reaktor bei einer Temperatur von mindestens 135 °C, vorzugsweise mindestens 145 °C, bevorzugter mindestens 155 °C, noch bevorzugter mindestens 165 °C, am bevorzugtesten mindestens 175 °C betrieben wird, und wobei der mindestens eine Reaktor bei einer Temperatur von höchstens 245 °C, vorzugsweise höchstens 235 °C, bevorzugter höchstens 225 °C, noch bevorzugter höchstens 215 °C, bevorzugter höchstens 205 °C und am bevorzugtesten höchstens 195 °C betrieben wird.

10. Das Verfahren nach einem der Ansprüche 1 bis 9, ferner umfassend den Schritt des Trennens des hydrolysierten Gemisches (M) in i) mindestens einen Festphasenanteil [im Folgenden Festphasenanteil (S)] und ii) mindestens einen Flüssigkeitsanteil [im Folgenden Flüssigkeitsanteil (L)].

11. Das Verfahren nach Anspruch 10, ferner umfassend den Schritt, mindestens einen Teil des mindestens einen Flüssigkeitsanteils (L) einer Verdampfung zu unterziehen, wodurch eine angereicherte, proteinhaltige Flüssigkeit [im Folgenden angereicherte Flüssigkeit (E)] mit einem Trockenmassegehalt Y₃ gebildet wird, wobei Y₃ mindestens 40 Gew.-%, vorzugsweise mindestens 43 Gew.-%, bevorzugter mindestens 45 Gew.-%, am bevorzugtesten mindestens 48 Gew.-% beträgt, und wobei Y₃ höchstens 60 Gew.-%, vorzugsweise höchstens 57 Gew.-% und bevorzugter höchstens 54 Gew.-% beträgt.

12. Das Verfahren nach Anspruch 10 oder 11, wobei zumindest ein Teil des Flüssigkeitsanteils (L) oder zumindest ein Teil der angereicherten Flüssigkeit (E) zur Bildung der wässrigen Flüssigkeit (A) wie definiert in Anspruch 1 verwendet wird.

13. Das Verfahren nach Anspruch 10, ferner umfassend den Schritt des Trocknens zumindest eines Teils des Festphasenanteils (S), wodurch eine verdauliche Feder- oder Haarzusammensetzung gebildet wird.

14. Das Verfahren nach Anspruch 13, wobei das Trocknen des zumindest einen Teils des Festphasenanteils (S) mit Luft durchgeführt wird, wobei der Festphasenanteil (S) eine Temperatur von höchstens 80 °C, vorzugsweise höchstens 75 °C und am bevorzugtesten höchstens 70 °C aufweist.

15. Eine verdauliche Feder- oder Haarzusammensetzung, nach dem Verfahren nach einem der Ansprüche 1 bis 14 hergestellt, umfassend mindestens 82 Gew.-% Proteine, bezogen auf das Gesamtgewicht der verdaulichen Feder- oder Haarzusammensetzung, wobei mindestens 84 % der Proteine verdauliche Proteine sind.

16. Eine angereicherte Flüssigkeit (E), hergestellt nach dem Verfahren nach Anspruch 11, umfassend mindestens 45 Gew.-% Proteine, bezogen auf das Gesamtgewicht der verdaulichen Feder- oder Haarzusammensetzung, wobei mindestens 95 % der Proteine verdauliche Proteine sind.

17. Eine essbare Zusammensetzung, eine agrochemische Zusammensetzung oder eine kosmetische Zusammensetzung, umfassend die verdauliche Feder- oder Haarzusammensetzung nach einem der Ansprüche 15, oder die angereicherte Flüssigkeit (E) nach Anspruch 16.

## Revendications

1. Un procédé de fabrication d'une composition digestible de plumes et de poils, dans lequel ledit procédé comprend :
(i) la fabrication d'un mélange hydrolysable [mélange hydrolysable (H), ci-après], ledit mélange hydrolysable (H) étant fabriqué selon un procédé comprenant :
a. la fourniture d'une composition [composition (C), ci-après] qui comprend des plumes et/ou des poils et de l'eau, l'eau étant au moins partiellement absorbée par lesdites plumes et/ou lesdits poils, et laquelle composition a une teneur en matière sèche de Y % en poids qui est égale ou inférieure à 60 % en poids par rapport au poids total de la composition (C)
b. l'extraction par pression d'au moins une partie de l'eau de la composition (C), formant ainsi une composition [composition (B) ci-après] qui a une teneur en matière sèche de Y₁, qui est supérieure à Y % en poids mais comprise entre 30 et 60 % en poids par rapport au poids total de la composition (B)
c. l'ajout d'un liquide aqueux [liquide aqueux (A), ci-après] à la composition (B), formant ainsi le mélange hydrolysable (H) dans lequel ledit mélange hydrolysable (H) a une teneur en matière sèche Y₂, qui est inférieure à Y₁ % en poids mais comprise entre 20 et 50 % en poids par rapport au poids total du mélange hydrolysable (H), dans lequel ledit liquide aqueux (A) est un liquide enrichi contenant des protéines qui est obtenu en tant que flux de produits après hydrolyse du mélange hydrolysable (H), et
(ii) l'hydrolyse dudit mélange hydrolysable (H).

2. Le procédé selon la revendication 1, dans lequel la teneur en matière sèche Y % en poids de la composition (C) est d'au plus 50 % en poids, de préférence d'au plus 40 % en poids, plus préférentiellement d'au plus 30 % en poids, encore plus préférentiellement d'au plus 25 % en poids.

3. Le procédé selon la revendication 1 ou 2, dans lequel la teneur en matière sèche Y₁ de la composition (B) est d'au moins 32 % en poids, plus préférentiellement d'au moins 34 % en poids, encore plus préférentiellement d'au moins 36 % en poids, plus préférentiellement d'au moins 38 % en poids, le plus préférablement d'au moins 40 % en poids, et dans lequel la teneur en matière sèche Y₁ de la composition (B) est de préférence d'au plus 58 % en poids, plus préférentiellement d'au plus 56 % en poids, encore plus préférentiellement d'au plus 54 % en poids, plus préférentiellement d'au plus 52 % en poids, et le plus préférablement d'au plus 50 % en poids par rapport au poids total de la composition (B).

4. Le procédé selon l'une quelconque des revendications 1 à 3, dans lequel la teneur en matière sèche Y₂ du mélange hydrolysable (H) est d'au plus 48 % en poids, de préférence d'au plus 46 % en poids, plus préférentiellement d'au plus 44 % en poids, encore plus préférentiellement d'au plus 42 % en poids, le plus préférablement d'au plus 40 % en poids, et dans lequel la teneur en matière sèche Y₂ du mélange hydrolysable (H) est d'au moins 22 % en poids, de préférence d'au moins 24 % en poids, plus préférentiellement d'au moins 26 % en poids, encore plus préférentiellement d'au moins 28 % en poids et le plus préférablement d'au moins 30 % en poids, par rapport au poids total du mélange hydrolysable (H).

5. Le procédé selon l'une quelconque des revendications 1 à 4, dans lequel le liquide aqueux (A) est un liquide comprenant de l'eau, enrichi en outre avec au moins des acides aminés, des polypeptides et/ou des protéines, et dans lequel ledit liquide aqueux (A) a une température qui est d'au moins 50 °C, plus préférentiellement d'au moins 60 °C, encore plus préférentiellement d'au moins 70 °C, plus préférentiellement d'au moins 80 °C, et le plus préférablement d'au moins 85 °C.

6. Le procédé selon l'une quelconque des revendications 1 à 5, dans lequel l'hydrolyse du mélange hydrolysable (H) est effectuée dans au moins un réacteur, formant ainsi un mélange hydrolysé (M).

7. Le procédé selon l'une quelconque des revendications 1 à 6, dans lequel l'étape d'hydrolyse est **caractérisée par** un temps d'hydrolyse d'au moins 3 minutes, de préférence d'au moins 4 minutes, le plus préférablement d'au moins 5 minutes, et dans lequel l'étape d'hydrolyse est **caractérisée par** un temps d'hydrolyse d'au plus 25 minutes, de préférence d'au plus 20, de préférence d'au plus 19 minutes, plus préférentiellement d'au plus 18 minutes, encore plus préférentiellement d'au plus 17 minutes, plus préférentiellement d'au plus 16 minutes, et le plus préférablement d'au plus 15 minutes.

8. Le procédé selon l'une quelconque des revendications 1 à 7, dans lequel l'au moins un réacteur fonctionne à une pression d'au moins 3 bars, de préférence d'au moins 4 bars, plus préférentiellement d'au moins 5 bars, le plus préférablement d'au moins 6 bars, et dans lequel l'au moins un réacteur fonctionne à une pression d'au plus 12 bars, de préférence d'au plus 11 bars, plus préférentiellement d'au plus 10 bars et le plus préférablement d'au plus 9 bars.

9. Le procédé selon l'une quelconque des revendications 6 à 8, dans lequel l'au moins un réacteur fonctionne à une température d'au moins 135 °C, de préférence d'au moins 145 °C, plus préférentiellement d'au moins 155 °C, encore plus préférentiellement d'au moins 165 °C, le plus préférablement d'au moins 175 °C, et dans lequel l'au moins un réacteur fonctionne à une température d'au plus 245 °C, de préférence d'au plus 235 °C, plus préférentiellement d'au plus 225 °C, encore plus préférentiellement d'au plus 215 °C, plus préférentiellement d'au plus 205 °C, et le plus préférablement d'au plus 195 °C.

10. Le procédé selon l'une quelconque des revendications 1 à 9, comprenant en outre l'étape de séparer le mélange hydrolysé (M), en i) au moins une portion en phase solide [portion en phase solide (S) ci-après] et ii) au moins une portion liquide [portion liquide (L) ci-après].

11. Le procédé selon la revendication 10, comprenant en outre l'étape de soumettre au moins une partie de l'au moins une portion liquide (L) à l'évaporation, formant ainsi un liquide enrichi contenant des protéines [liquide enrichi (E) ci-après], ayant une teneur en matière sèche Y₃, dans lequel Y₃ est d'au moins 40 % en poids, de préférence d'au moins 43 % en poids, plus préférentiellement d'au moins 45 % en poids, le plus préférablement d'au moins 48 % en poids, et dans lequel Y₃ est d'au plus 60 % en poids, de préférence d'au plus 57 % en poids, et plus préférentiellement d'au plus 54 % en poids.

12. Le procédé selon la revendication 10 ou 11, dans lequel l'au moins une partie de la portion liquide (L) ou l'au moins une partie du liquide enrichi (E) est utilisée pour former le liquide aqueux (A) tel que défini dans la revendication 1.

13. Le procédé selon la revendication 10, comprenant en outre l'étape de sécher au moins une partie de la portion en phase solide (S), formant ainsi une composition digestible de plumes ou de poils.

14. Le procédé selon la revendication 13, dans lequel le séchage de l'au moins une partie de ladite portion en phase solide (S) est effectué avec de l'air, dans lequel ladite portion en phase solide (S) a une température d'au plus 80 °C, de préférence d'au plus 75 °C et le plus préférablement d'au plus 70 °C.

15. Une composition digestible de plumes ou de poils fabriquée selon le procédé selon l'une quelconque des revendications 1 à 14, comprenant au moins 82 % en poids de protéines par rapport au poids total de la composition digestible de plumes ou de poils, dans laquelle au moins 84 % des protéines sont des protéines digestibles.

16. Un liquide enrichi (E) fabriqué selon le procédé selon la revendication 11, comprenant au moins 45 % en poids de protéines par rapport au poids total de la composition digestible de plumes ou de poils, dans lequel au moins 95 % des protéines sont des protéines digestibles.

17. Une composition comestible, une composition agrochimique ou une composition cosmétique comprenant la composition digestible de plumes ou de poils selon l'une quelconque des revendications 15, ou le liquide enrichi (E) selon la revendication 16.
